# EUROPEAN PATENT SPECIFICATION

(11) **EP 1 652 062 B1**
(45) Date of publication and mention of the grant of the patent: **25.05.2016**
(21) Application number: 04778204.0
(22) Date of filing: 12.07.2004
(51) Int. Cl.: G06F 7/00, G06F 17/30, G06F 15/173

(54) **SYSTEM AND METHOD FOR USING AN XML FILE TO CONTROL XML TO ENTITY/RELATIONSHIP TRANSFORMATION**
SYSTEM UND VERFAHREN ZUR VERWENDUNG EINER XML-DATEI ZUR STEUERUNG VON XML FÜR ENTITÄT/BEZIEHUNG-TRANSFORMATION
SYSTEME ET PROCEDE D'UTILISATION D'UN FICHIER XML AFIN DE COMMANDER UNE TRANSFORMATION XML VERS UNEENTITE/RELATION

(30) Priority: 11.07.2003 US 486869 P
(43) Date of publication of application: 03.05.2006
(73) Proprietor: CA, Inc., Islandia, NY 11749 (US)
(72) Inventor: WEST, William, John, Langhorne, PA 19047-2161 (US)
(74) Representative: Dunlop, Hugh Christopher
(86) International application number: PCT/US2004/022567
(87) International publication number: WO 2005/008473

(56) References cited:
- WO-A-02/054188
- US-A1- 2002 040 639
- US-A1- 2002 049 603
- US-A1- 2002 073 236
- US-A1- 2003 061 229
- US-A1- 2003 097 435
- US-A1- 2004 181 537

## Description

### TECHNICAL FIELD

This application relates to meta data transformation.

### BACKGROUND

Metadata creation or storage systems may have the ability to export that metadata information. There is a need to transform this source back into an entity/relationship form for storage. For example, repositories or database management systems may include an option for importing metadata from an exported output of a data modeling tool. Frequently, these outputs of data modeling tool are in a proprietary format, requiring a customized application to read and analyze the format for each proprietary format. Accordingly, a system and method for transforming metadata information into an entity/relationship form (for example, a relational database form) for storage, that is adaptable to different sources of metadata is desirable.

WO 02054188 discusses a technique for processing data from a combinatorial experiment, by receiving data from a chemical experiment on a library of materials having a plurality of members and generating a representation of the chemical experiment. The representation includes data defming an experiment object having a plurality of properties derived from the chemical experiment. The experiment object is associated with the library of materials. The representation also includes data defining one more element objects. Each element object is associated with one or more members of the library of materials. A data model and corresponding data structures for describing such experiments are also disclosed.

US 2002073236 discusses a system and method for managing data exchange among systems in a network, by translating data from a system specific local format to a generic interchange format object, and vice versa, with predefined stylesheets using generic components and a system specific service components which utilize a native application programming interface of the specific local system.

### SUMMARY

A system and method for transforming output of a data modeler to a repository storage form is provided.

According to one aspect, the present invention provides a method for transforming output of a data modeler to a relational table form as set out in claim 1.

According to another aspect, the present invention provides a system for transforming output of a data modeler to a relational table form as set out in claim 8.

Further features as well as the structure and operation of various embodiments are described in detail below with reference to the accompanying drawings. In the drawings, like reference numbers indicate identical or functionally similar elements.

### BRIEF DESCRIPTION OF THE DRAWINGS

Fig. 1 is a flow diagram illustrating the method of the present disclosure in embodiment.
Fig. 2 is a flow diagram illustrating Element Start event processing in one embodiment.
Fig. 3 is a flow diagram illustrating processing of property in one embodiment.
Fig. 4 is a flow diagram illustrating End Element event processing in one embodiment.
Fig. 5 is a flow diagram illustrating processing of object rules in one embodiment.
Fig. 6 is a flow diagram illustrating processing of content in one embodiment.
Fig. 7 is a flow diagram illustrating processing of object associations in one embodiment.
Fig. 8 is a flow diagram illustrating the sibling processing component of Fig. 7, in one embodiment.
Fig. 9 is a block diagram illustrating the parser event processing in one embodiment.
Fig. 10 is a block diagram illustrating the character event processing in one embodiment.
Fig: 11 shows an example of control file that includes mapping relationships in one embodiment.
Fig. 12 shows an example of a portion of a control file in one embodiment.
Fig. 13 is a block diagram showing an example of memory structure converted from a control file.
Fig. 14 is an architectural diagram illustrating the system components in one embodiment of the present disclosure.

### DETAILED DESCRIPTION

Metadata source or an exported output file from a data modeling tool may include objects, properties of those objects, and relationships between the objects. The metadata source or the exported output file may be in an XML (extended markup language) format. The relationships connect the objects into a network with arbitrary linkage. The serialization process that produces an XML form of the metadata model may represent some of the relationships by references in the attributes or content of the elements, as well as the containment relationships of the element nesting.

For example, a set of objects A, B, and C and relationships between each pair may be serialized as:

```
     <Object ID="A">
           <Object ID="B" ref="C">
           </Object>
           <Object ID="C">
           </Object>
     </Object>
```

where containment of the XML elements B and C with A indicates two of the three relationships, and the remaining one is indicated by the attribute "ref".

An alternative form may be:

```
      <Object ID="A">
           <Object ID="B">
                C
           </Object>
           <Object ID="C">
           </Object>
     </Object>
```

where the connection between B and C is conveyed by content.

In one embodiment, the set of objects recognized by the source and target systems may not be the same. That is, the set of objects in the exported output file from a modeling tool may not be the same as the set of objects in a relational storage system. An object type from one may be the equivalent of multiple object types in the other. An example of this may be that one record is Men and Women and the other People, with an additional property to distinguish the sexes. The transformation process, in one embodiment, is able to decide between alternative targets in transforming the input.

In addition to alternatives, the transformation process allows for composition and decomposition of objects. An object in the source may produce multiple objects in the target and vice versa. An example of composition is illustrated below:

```
     <Object ID="A">
                    ... properties of A ...
          <OtherObject ID="B">
                ... properties of B ...
          </OtherObject>
                    ... more properties of A ...
     </Object>
```

To compose A and B into a single output A, the <OtherObject> tags are ignored entirely and the properties are treated as all contained in, and thus belonging to A. The reverse process attributes properties to each daughter object resulting from splitting the parent object into two or more. The daughter objects may have implied relationships resulting from the split, for example, because they are siblings.

Decomposition may also be combined with alternative outputs. One source object may result in a variable number of target objects, depending on its properties.

Properties are associated with their owning object by containment in the XML tree or XML's hierarchical format. They may appear as XML elements or attributes according to the serialization style chosen by the exporting application. There may be requirements to map properties from the source system to alternative target system properties, and to compose or decompose properties. However, since properties do not participate in relationships, the other considerations do not arise. Properties do have values that need mapping from one system to the other. A property recorded as "yes" or "no" in one system may be recorded as "true" or "false" in another.

In one embodiment, to transform the XML-formatted serial form of a model from one system to the model of another, the system of the present disclosure may include, but is not limited to, the following components:
1) a module or device that is programmed to recognize the objects from the source system. XML provides, for example, one identifier mechanism (ID) which provides uniqueness within a document. It is a reasonable assumption that any XML serialization will use the ID property to mark objects as this provides for the additional links required to represent a network model in a tree structure. Anything with an ID is considered a candidate Object in one embodiment. If the DTD of the source-format is available, the ID attribute can be determined from the DTD, otherwise it is part of the control data.
2) a declaration of the mapping of the source objects to the target objects. This accommodates the specification of alternatives, compositions and decompositions. Where alternatives or optional outputs are declared, the rules for determining the outputs are also provided, for example, in the control file.
3) a module or device programmed to recognize the properties from the source system. Properties are serialized as subordinate elements or as attributes, or a mixture of the two.
4) a declaration of the mapping of the source properties to the target properties.
5) a declaration of the mapping of property values.
6) a declaration of the relationships between the objects, indicating how they are to be recognized, for example, by containment of one object in another, ID as content or attribute, and/or implicitly as siblings from object decomposition.

XML is in use for a large number of purposes, for example, in XSLT, where one XML format is transformed to a related tree-structured output by the use of a style sheet which is itself an XML document.

In one embodiment of the present disclosure, a specification formatted as XML is used to control the transformation of an XML document into rows in a standardized set of relational tables. These tables may contain objects, properties of those objects, relationships between the objects, and descriptive text associated with the contents of the other tables.

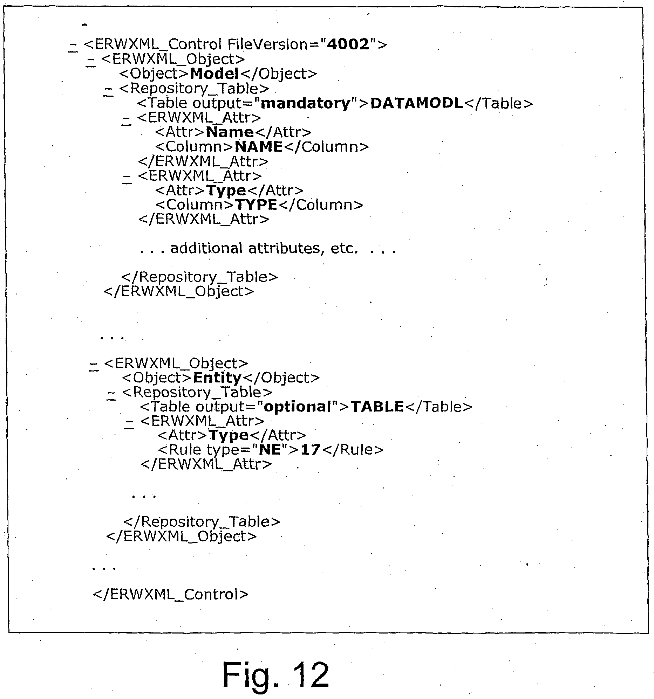

The selection of data to be transformed, and the mapping of object names, and object content, in one embodiment is not coded into the scanner logic, but is supplied declaratively in the "control file", for example, the above-mentioned specification formatted as XML, and thus may can be customized by the customer. The control file document includes a serialized form of the internal control structures needed for the transformation process. Fig. 12 shows an example of a portion of a control file.

In one embodiment, the structure of the XML export format may have basic assumptions to accommodate individual metadata formats. Alternatively, a more general processor, for example, that includes built-in rules or assumptions may be designed that can handle generic metadata formats.

Both the source and control files are processed using a SAX method, for example, in which a standard XML parser base calls the application-specific code to process events in the document stream. Briefly, SAX (Simple API for XML) is an application program interface (API) that allows a programmer to interpret a Web file that uses the Extensible Markup Language (XML) - that is, a Web file that describes a collection of data. SAX is an alternative to using the Document Object Model (DOM) to interpret the XML file.

SAX is an event-driven interface. The programmer specifies an event that may happen and, if it does, SAX gets control and handles the situation. SAX works with an XML parser. The events relevant to the process described in the present disclosure include Document start, Document end, Element start, Element end, and Character content.

In one embodiment, the transformation takes place in two phases, conversion of the XML-structured control file into internal data structures that permit easier lookup, and use of those data structures to process the subject XML stream into the relational table form.

The system and method of the present disclosure, for example, may be used to transform data that was exported from ERwin™ modeler to Advantage Repository™. In one embodiment, an assumption that the attribute "id" is the formal ID that can uniquely identify an element in the DTD for the source format of ERwin™ to Advantage Repository™ implementation, is built in. This ID is distinctively formatted in an ERwin export file.

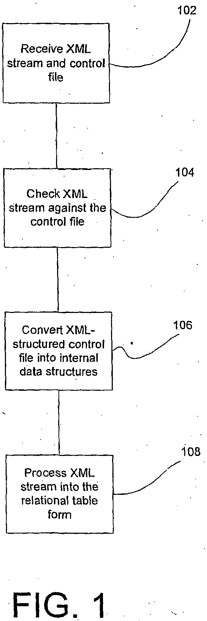

Fig. 1 is a flow diagram illustrating the method of the present disclosure in one embodiment. At 102, the source XML stream and control file are received. The source XML stream, for example, is an output that was exported from a data modeling tool. The control file tells how to interpret the source XML stream. In one embodiment, the outer document element of the source XML stream is checked against its counterpart in the control file, for example, to ensure that they refer to the same structure at 104. For example, this may include checking the root tagname and a version attribute.

Next, the first phase of the transformation process is initiated. For instance, the XML control file is parsed into a memory structure to facilitate the analysis of the source XML file at 106. XML parsing into a memory structure is a common procedure and will not be described in detail here.

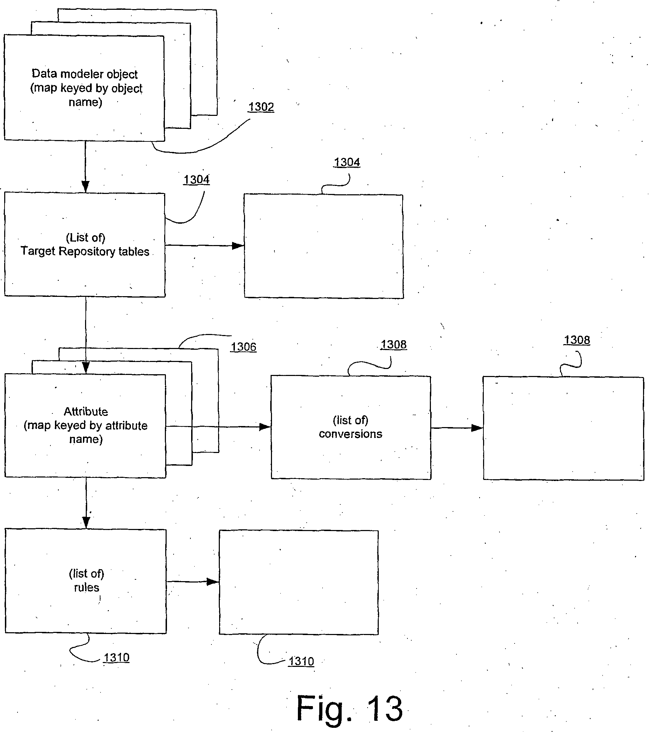

The resulting memory structure is illustrated in Fig. 13. One or more objects 1302 are stored in memory as an array or any other data structure. Target repository tables associated with an object 1302 may be stored as a linked list of target repository tables 1304. One or more attributes associated with an object 1302 may be stored in memory as an array or any other data structure. The attributes may have a list of conversions stored as a linked list of conversions 1308. List of rules may be stored as a linked list of rules 1310. These components may be stored as any other data structure and is not limited to linked lists.

The second phase of transformation reads the remainder of the source XML file and writes to tables in a RDBMS at 108. These tables hold Objects, Properties, Associations, and an additional table holds Text items, for instance, to avoid column overflow in the three basic tables. Where an Association between objects has its own properties, a matching Object is created to act as their parent.

In one embodiment, the second phase logic is invoked from the parser reading the source XML stream, at the events described above. Document Start has already occurred, for example, when the input stream was received, and the first Element Start was the point where the source and control files were checked for compatibility. The processing for the remaining events, Element Start, Element End, Character content, each of which may repeat many times, and finally Document End, are individually described below.

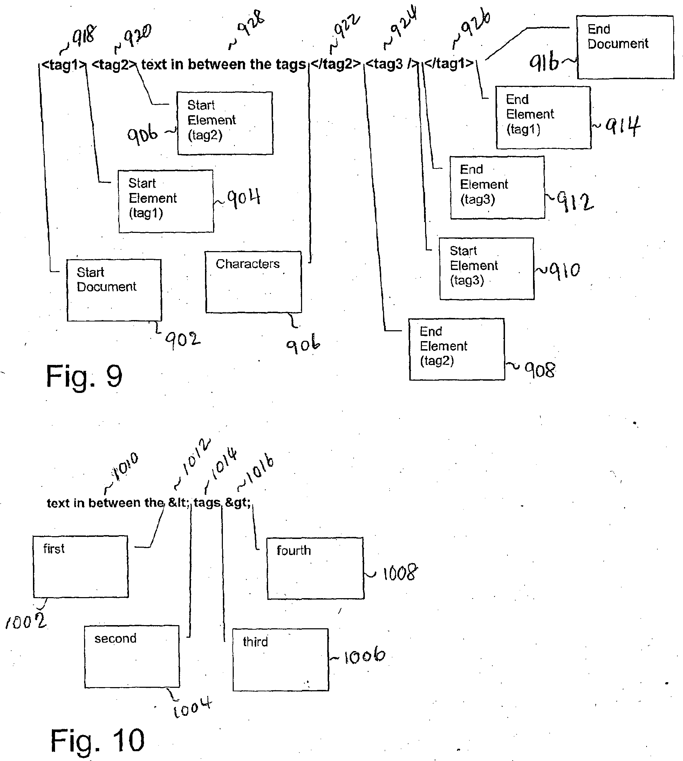

Fig. 9 is a block diagram illustrating the parser event processing in one embodiment. Start Document event 902 is invoked when the input stream is received. In one embodiment, each Start or End Element call is made after the complete tag has been read. For instance, Start Element event 904 for tag1 item is invoked after the complete tag "<tag1>" is read; Element event 906 for tag2 item is invoked after the complete tag "<tag2>" is read.

End Document event 908 for tag2 is invoked after reading "Tag3 is an empty tag, denoted, for example, by "<tag3 />" 924. Thus, Start Element and End Element events 910, 912, in one embodiment, are invoked at the same point in the input stream, for instance, after "<tag3 />" 924 is read. End Document event 916 is invoked after the End Element event 914 for the final tag, "</tag1>" 926 (which, for example, matches with the first tag 918) is invoked.

Characters event 906 is invoked after the text 928 is read, the text, for example being enclosed between a pair of tags 920, 922. If the text in 928 were "text in between the <tags>", the text is escaped as "text in between the <tags>". Each escape sequence triggers a separate call to Characters event as shown in Fig. 10. For instance, first character event 1002 is invoked after reading the text "text in between the" 1010. Second character event 1004 is invoked after the first escape sequence 1012. Third character event 1006 is invoked after "tags" text 1014. Fourth character event 1008 is invoked after the second escape sequence 1016.

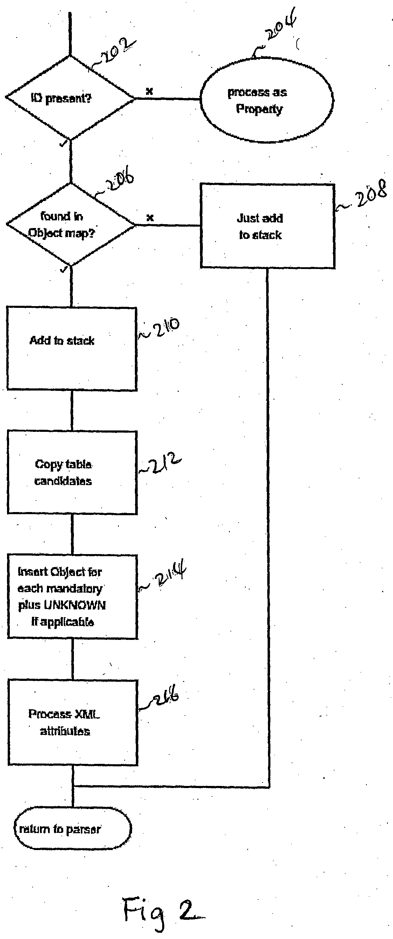

Fig. 2 is a flow diagram illustrating Element Start event processing in one embodiment. The processing in one embodiment assumes that the serialized objects have ID attributes at 202. The ID attributes are used to support the extra linkage required by the network structure of the source metadata. In one embodiment, if an element has no ID attribute, it is assumed to be not an object, and is processed as a property as shown at 204. The opposite is not necessarily true, a property may have an ID for other purposes, so a further test is made to determine if the user has declared one or more target objects to record from the current element. For example, the objects may be found in object map that lists the objects of interest at 206. This may still not distinguish a property from a discardable object, so its presence will be recorded in the object stack in all cases at 208 and 210 in one embodiment.

The object stack enables detecting containment of one object in another, as there may be a point where both are on the stack, and one of them is the top entry. This information is used during an Element End call.

A list of candidate target objects that may derive from the current source object is built by copying the list of declared potential targets. This list is reduced as rules dictate during the calls between this and the Element End call, so that at that call, only a default target object may remain.

In one embodiment, records of target objects that are unconditionally derived are inserted in the database tables immediately at 212. Where there are conditional outputs, a single record is additionally inserted with an UNKNOWN object type at 214, which is used later as a model when rules determine the actual target type(s).

Properties that are present in the source as XML attributes are accessible at this point and can be processed fully at 216. XML attributes and subordinate elements with content are semantically equivalent and are processed similarly. This processing is described under Element End.

Properties that are formatted as subordinate elements accumulate over subsequent calls. Their presence is established by the Element Start call, so rules based on the existence of a property may be satisfied on this call.

For Element End event, at the end of any element, the character content (if any) is now complete and may be processed.

For Element End event, at the end of an element that represents an object, the name of the element will match that at the top of the object stack, so this match may be used to distinguish object end from property end.

In the case of an object, the first operation is to record default properties where applicable. These may result in the identification of the object, if a rule is of the form "identify as X if it has property Y", and property Y is the default. As each XML element is recognized by the parser it calls a code of instructions of the present disclosure. In the codes, for example, all rules connected to the identified element are checked. The rules, for example, are listed in the control file and converted to a memory lookup structure at the start of the process.

Next, a test is made to determine if a default object identification applies, for instance, no other rule-based choice has been made identifying the object as an alternative target object. After these two processes, the selection of target objects is complete for this source object.

At this point a set of actual target objects selected may be retrieved from the database and sibling relationships established. For instance, the process described above has recorded the targets selected in the database. This data is read back.

In the case of the end of a property element, the character content is recorded as the value of one or more target properties. Where the content is a reference to an object, an Association is recorded. The value may trigger a rule identifying the parent object, and may eliminate alternatives from consideration.

The Character Content event allows the accumulation of the content string. This call may be received multiple times for sections of the content of a single element, and the content string is complete when the Element End call is received. For this reason all other processing is deferred until that call.

During the Document End event, at the end of the document, any associations which have been recorded with incomplete information are deleted.

In one embodiment, there are two types of rules. One is based on the existence of a property and the other on the value of a property. These are evaluated when the property is encountered in the input stream. The first type may be processed without any logic. If there is a rule to process, then it needs to be matched.

In the value-based rules, values themselves may be mapped to allow for source/target differences in recording. For example, a boolean value may be recorded as 0 or 1, or "truce" and "false", or "yes" and "no". The rule may be evaluated before or after the mapping. In one embodiment, the order is predetermined and fixed. There may be a minor potential for performance improvement by doing the mapping before the evaluation. Value-based rules can match on equal value, higher or lower value, or unequal value.

As each property is encountered, any associated rules are evaluated. If the rule matches, an object is either identified or eliminated (meaning that the corresponding entry is deleted from the list of candidate target objects).

When a rule is matched, the following action is taken, according to the object output type and the rule's action type.

| | **output=choice** | **output=optional** |
|---|---|---|
| **action=include** | object is written; all other objects with output=choice are eliminated | object is written |
| **action=exclude** | object is eliminated | invalid (use the inverse rule with include) |

As soon as an object is identified, an object record is created in the database. A record is also written for any association that may involve the identified object, for example, after completing any existing association records that were already written awaiting identification of the object. Depending on the sequence of the source elements, one end of an association may be identified before the other, and the association records are often written with the first identified end, and then updated later when the second is identified. In the case where one object contains another, an association record may be written to record the containment relationship prior to either object being identified, in which case it will be updated twice. The update process may be a delete/insert operation as a source object may be identified as more than one target object, so multiple records may result.

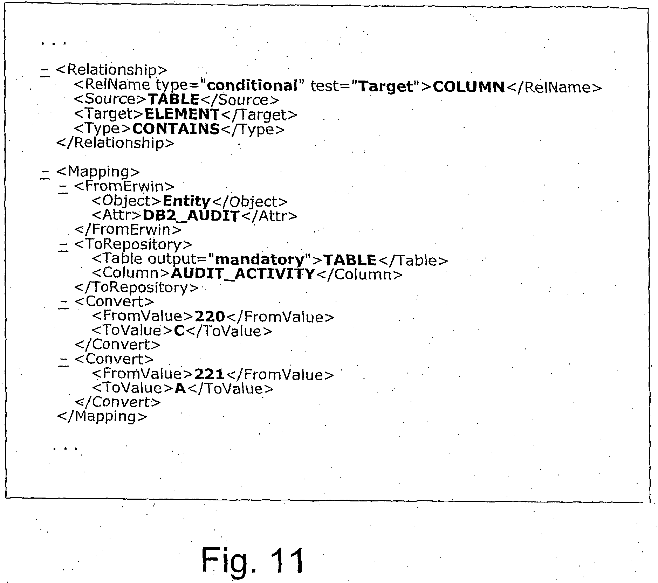

In one embodiment of the present disclosure, the control file includes information such as mappings between the entities and attributes, for example, that are XML elements and their corresponding Repository counterparts. Fig. 11 illustrates a portion of the control file in one embodiment that illustrates such mappings. The control file may also include information such as which entities are split into multiple targets, and which attributes are associated with each, and which relationships connect the sibling entities. The control file may also include details of the relationships used when an element content is an entity reference, and content maps to convert attribute values that are recorded in changed formats, for example, true/false versus 0/1 or Y/N. The control file may be in a form of an XML document in one embodiment.

The control file may be converted into internal structures to facilitate lookup when processing the exported output file from a data modeler such as the ERwin file. In one embodiment, these structures may be MFC (Microsoft™ Foundation Classes) Maps (Hash tables) where a string key (the XML element name) retrieves an object, which aggregates the outputs for that object or attribute. Others may be keyed by the output object. There may also be instances of nested Maps, where the object retrieved is also a Map. This provides for multiple objects with the same attribute name.

In one embodiment of the system and method of the present disclosure, calls to the user code are invoked when events are detected in the input stream. The system and method receives and processes the start of each element, the end of each element, the start and end of the document, and the text content of an element.

When the element start event is received, for instance, from parsing the input stream, the element name is looked up to determine if it is a Repository recorded entity type. A recorded entity may be divided into multiple targets, so the next lookup is for this case. If an "id" attribute is available, this is treated as an object, not a property.

In one embodiment, a stack is maintained to determine the containment relationships for entities. In one embodiment, only entities with an id are placed on the stack. After checking for entities, an attribute may be made. For example, a check within the allowed attributes for the current entity is made, for instance, making a tree internal structure. There may be two levels for entity and attribute. Maps of Maps are also possible, again at two levels. The latter gives a keyed lookup, whereas a tree may need iteration code to locate the node.

Anything unidentified at this point may be ignored. Where an entity of a data modeler (for example, ERwin) is split into more than one Repository entity (for example, "entity" from a data modeler may be split into "element", "column", and additional repository components), there are a number of cases to consider. The first case involves creating multiple outputs and dividing attributes between them, where the target objects can be created immediately the source entity is recognized. For example, "entity" may be mapped to a Repository "element", thus the creation of an "element" in Repository is conditional only on the existence of the "entity" instance.

Another situation is where there is a choice between multiple targets based on content. At the point that the element start is encountered, the information allowing the decision to be made will not have been processed, so target entity creation is deferred until that data comes up. If child entities intervene, the outer data should not be lost, nor should it be inaccessible to lookups from the inner entity processing. Each target entity is created and possibly re-built later when the decision point arrives. An alternative is to build an OI table entry with a type of UNKNOWN, and update that once the decision can be made.

During the Element End event processing, the current entity is popped off the stack as appropriate. Where identification of the output object(s) depends on an existence test, this may be the point at which non-existence falls out. The presence of parsed entities (such as <) in the text content of the ERwin file means that the Characters call below is potentially made multiple times for a single element. The end of the element is the point at which it is known that the accumulation of content is completed.

The characters event call gets the content of an XML element (as opposed to the markup). This may be an ID or implied entity reference, or content that is translated before it is recorded in Repository. For example, attributes in the ERwin document have content, but an object and a relationship to it may be recorded for some attribute types (such as a TABLESPACE name as an attribute of a table)

Document start and end events provide convenient locations for the opening and closing of the output tables. The start process uses a user id from the dialog to tag each record output (WORK_UNIT column). The end process triggers a check for unresolved UNKNOWN entries in a working table, for example, the OI table. If any are found, there may be an option to delete the entire run (via WORK_UNIT). This is optional, because it may prove valid to replace an incomplete partial model in a re-run. Similarly a table (AI) may need to be checked for incomplete relationships, where element content referred to an object identifier that was never found in the input stream.

Database tables processing is to insert records. In the event of a duplicate, (which implies the same user id (a.k.a. WORK_UNIT) is being reused) there may be a first-time prompt to ensure this is expected, giving the user the choice of (a) deleting all existing data for that user id, (b) replacing duplicates as they are encountered, or (c) aborting the run, and backing out all prior insertions. Since attributes (AI) refer to their parent objects (OI) by GUID, the update from UNKNOWN to a valid entity-type does not require updates to the AI table at the point that the type is determined. The lookup that drives an attribute conversion does not require that the target object type be known, as the lookup is primarily by the data modeler (for example, ERwin) object type, before the Repository one is considered.

Because of UNKNOWNs, duplicates are not detected during the processing. Optionally, they are deleted by work-unit at the start.

If an id attribute is found, so it is known that the element represents an object (for example, ERwin object), it is possible to retrieve a "to do list" from the object Map. This pointer is added to the stack entry, so that element end processing can use it for determining existence tests.

The pointer references a number of other structures: a list of (potential) output objects, each of which has a Map of attribute information and a list of objects that can contain it; a rules structure for distinguishing the choice or split of objects. If an output object is determined, (or when a rule matches later), the list of containers is checked against the stack to decide what AI row(s) to produce. Since rules are defined against attributes directly belonging to a data modeler object (for example, an ERwin object), the data modeler object is at the top of the stack when a rule is matched in one embodiment.

For an attribute element, the Map(s) pointed to by the top stack entry cover all potential target Repository attributes. If the current object(s) have not yet been determined, (a flag in the stack entry indicates this) then the rule list is evaluated to see if the current element makes the decision(s). The content call may be used for this process to complete, unless it is an exists rule.

The various ways a relationship is recognized are:
Containment one ERwin object nested inside another;
Entity division - one ERwin object divides into more than one Repository entity and relationships are created between the siblings;

Explicit reference to a UUID as content.

The first two of these are recognized when the object (for example, ERwin object) is processed. The nature of an entity division relationship may be dependent on a choice of target entities being determined later via rules, but it is known that some kind of relationship is pending as soon as the object is encountered. So every time a new entity is encountered, a check for relationships is made. The third type of connection may be made easier by the fact that the XML file contains formatted UUID's with enclosing braces. UUID refers to universally unique identifier, also known as GUID, globally unique identifiers, used as object identifiers.

The presence of a brace as the first character of attribute content triggers a check for a relationship to record. Since the element does not identify the type of object being linked, the OI table is queried to find the other end of the relationship. To allow for the possibility of a forward link this may be left to end-of-document, or a check made for incomplete relationship data when a potential target entity is being added - that is, when a record is added to OI, check AI for matching UUID and complete the type data. The XML control file may be used to allow selective import, in which case it is possible for the AI record to be deleted, instead of completed at this point.

At end-of-document, the AI data is checked for completion of all relationships. In one embodiment, all the content of the ERWin XML file need not be processed. Thus, incomplete relationships may be deleted, as it is assumed that the omitted data was not selected by the current control file.

Since an ERWin object may not be identified as a unique Repository object there may be additional considerations in the identification of containment relationships. If A contains B, then either A or B or both may become multiple Repository objects, and these may not all be determined until the end of element call for A. Since the ends of the relationship determine which relationship is involved, even the name may not be filled in initially. There is an equivalent of "UNKNOWN," for the relationship itself, so "CONTAINS" is used for this. The source end of a CONTAINS normally is an UNKNOWN (with a UUID recorded) but if the relationship is only written on the end Element call for the inner item, the Target is known. The resultant relationships may have their direction opposite to this, so it may not update for this case. The temporary AI record is retrieved, deleted, and one or more new records written.

A further consideration is that there may be more than one association between containers and contents. In order to determine which applies, a rule is applied to the association in much the same way as objects are distinguished. For example, a key may be primary or foreign, but both become a KEY object, and the relationship to the containing TABLE object depends on the presence of properties of the KEY object.

Table 1 illustrates work tables used in one embodiment of the present disclosure.

**Table 1. Worktables (XML MODEL)**

| **OI** | | |
|---|---|---|
| WORK_UNIT | VARCHAR (30) | Unique identifier of User |
| KEY_GUID | VARCHAR (254) | Unique identifier of Object (GUID) |
| ENT_NAME NAME | VARCHAR (254) | Entity Name (Repository) |
| ENT_TYPE | LONG | Entity Type (Repository) |
| ENT_ID | LONG | Entity Id (Repository) |

| **PI** | | |
|---|---|---|
| WORK_UNIT | VARCHAR (30) | Unique identifier of User |
| KEY_GUID | VARCHAR (254) | Unique identifier of Object (GUID) |
| ENT_NAME | VARCHAR (254) | Entity Name (Repository) |
| PROP_TYPE | VARCHAR (18) | Property Name of Object (Repository) |
| PROP_VALUE | VARCHAR (254) | Property Value (Repository) |

| **AI** | | |
|---|---|---|
| WORK_UNIT | VARCHAR (30) | Unique identifier of User |
| KEY_GUID | VARCHAR (254) | Unique identifier of Obj ect (GUID) |
| ENT_NAME | VARCHAR (254) | Entity Name (Repository) |
| KEY_GUID_SOURCE | VARCHAR (254) | Source Key (GUID) |
| ENT_NAME_SOURCE | VARCHAR (254) | Source Object Name (Repository) |
| KEY_GUID_TARGET TARGET | VARCHAR (254) | Target Key (GUID) |
| ENT_NAME_TARGET | VARCHAR (254) | Target Object Name (Repository) |

| **TI** | | |
|---|---|---|
| WORK_UNIT | VARCHAR (30) | Unique identifier of User |
| KEY_GUID | VARCHAR (254) | Unique identifier of Object (GUID) |
| ENT_NAME | VARCHAR (254) | Entity Name (Repository) |
| TEXT_TYPE | CHAR (1) | Type of Text (Repository) |
| TEXT | LONGVARCHAR | |

The control file may contain an internal Document Type Definition. It may be validated when loaded into a browser such as the Internet Explorer™ browser using the Validation page supplied.

The following description explains part of the control file in one embodiment. The construction herein is described using an example of a control file for analyzing an input stream from_ERWin data modeler. It should be understood, however, that any other type of control file may be used in the system and method of the present disclosure.

Repository input from an ERWin object are detected, for example, in the Control File that includes the following entry:

```
     <ERWXML_Object>
        <Object>objectname</Object>
         <Repository_Table>
              <Table output="optional">tablename</Table>
     </ERWXML_Object>
```

if the "objectname" matches the tagname in the ERWin XML file.

The <Repository_Table> group above defines where the data is to be stored in the Repository, for example, in the "tablename". This can be in more than one table, and can be conditional on the presence or values of contained properties.

If ERwin object is one of a choice of Repository entities, then the Table tags will specify output="choice" for each of the alternative types. Tables may have a rule specified for an attribute that will allow the entity type to be,recognized. The one without a rule is treated as a default type, and is used if no contradictory identification is made by the.time the end tag is encountered in the ERwin XML file.

More than one rule can be specified for an object, and they can be "equals" rules, where the value of an attribute determines the object type. A complementary rule may be coded for each output table, with its corresponding value or range - operators GE GT NE LE and LT are supported in addition to equals, or it can.be an "exists" rule, which identifies the output if the attribute is present, for example, View_Ordered_By can only be an attribute of a VIEW. Multiple rules for a single attribute may be specified. For example,

```
         <Rule type="equals">Y</Rule>
         <Rule type="equals">y</Rule>
         <Rule type="equals">1</Rule>
```

In one embodiment, the Mapping process is done before testing the rule. A property that is recorded in Repository is checked, as the rule deals with the final value recorded.

There need not be a default. Every table can have a rule to identify it, as may be the case where there is a type attribute, with the various values distinguishing the entities output.

If there is a situation where multiple Repository entities result from one ERwin object, then there may be one choice. For example, "Entity" can become ENTITYTP + TABLE or ENTITYTP.+ VIEW. In this case,

```
     <Repository_Table output="mandatory">
           <Table>ENTITYTP</Table>
```

may be found to register the fact that the ENTITYTP output is always produced, and the choice is between the remaining outputs.

It is also possible to have additional optional tables output if an attribute exists. These will have output="optional" and an "exists" rule. Typically the attribute contributing to the table will be the one matching the rule. An example of this is the DB2_IN__TABLESPACE attribute for the ENTITY object, which creates a TBSPACE object and its content becomes the NAME property for that object.

```
           <Repository_Table>
               <Table output="optional">TBSPACE</Table>
               <ERWXML_Attr>
                  <Attr>DB2_IN_TABLESPACE</Attr>
                 <Column>TABLESPACE_NAME</Column>
                 <Rule type="exists"></Rule>
               </ERWXML_Attr>
            </Repository_Table>
```

These situations also create associations between the sibling outputs. These are coded in the control file with <Type>SIBLINGS</Type>. The scanner searches its list of relationships at the end of the ERwin object, when it finally knows what outputs were produced, and creates an association record for each pair of siblings with matching types. It may not generate more than one association between any pair in one embodiment.

At the end.of an ERwin object, relationships resulting from nesting the elements of the XML file are checked. For example, if the following syntax is found,

```
          <A id="...">
            <X>
              <B id=n;..">
              </B>
            </X>
          </A>
```

then an association record is written when the </B> is encountered (and know what type of Repository entity B turned out to be) which records that it is contained by A (type UNKNOWN, because processing it is not finished). When </A> is reached and A is identified, this is rewritten to complete the information, and identify the relationship involved. If no relationship exists in Repository for this combination of entities, the record' may be deleted. Candidate relationships are recorded in the control file as <Type>CONTAINS</Type>.

Another type of association found by the system and method of the present disclosure is where the content of an element is the UUID of another object. These are defined in the control file as <Type>Element-name</Type> where the Element-name is the tag value. As a check, these are initially written out with the target being UNKNOWN, and updated at the end if the UUID is found as "id=" on another element.

A relationship may also be marked as "conditional", that is, it will only produce a record on the AI table if a corresponding record is also written to the OI table. This is used for Relationships (as opposed to associations in Repository terms) where attributes are present for the relationship, as well as the connected entities. Typically, the OI record is the result of an "optional" entity.

When matching properties, each <Attr> tag is looked up to see if it matches the current element. If the Attr content contains a space, this indicates a match is required on an element and an attribute where the part after the space is the attribute name. This is used to create an additional PI row for the Read-Only (RO='Y') and Derived-Value (DV='Y') attributes.

The XML control file is parsed into a set of maps and lists to facilitate the lookup when the Erwin data is being parsed. In one embodiment, the structure is a kind of tree where some levels are keyed. The ERwin XML parser keeps pointers to the current entry at each level of this tree, as well as a stack representing the nesting of objects, which is used to recognize implied parent-child relationships.

In one embodiment, the list of candidate tables for an ERwin object is ordered so that "mandatory" and "optional" outputs are before the "choice" outputs. This is done so that the scan can be terminated (and the list altered) when a choice is identified, having already processed any optionals.

Further, a list of mappings pointed to by the column entry may be provided. Also the attribute maps can have another level (of attributes of attributes) for the RO and DV situations.

In one embodiment, relationship data is not part of this tree. A different structure, for instance, where each entry can have two keys, may be used for relationship data. For multiple relationships from or to any particular entity type, a Map of Lists of pointers may be used. The entity (source or target) can be looked up in the map, which will return a list of (pointers to) relationships that involve that entity. The list is searched sequentially. In one embodiment, a "master" list is used to hold all relationships, with the lookup lists just holding pointers into it. This allows a single path for cleanup.

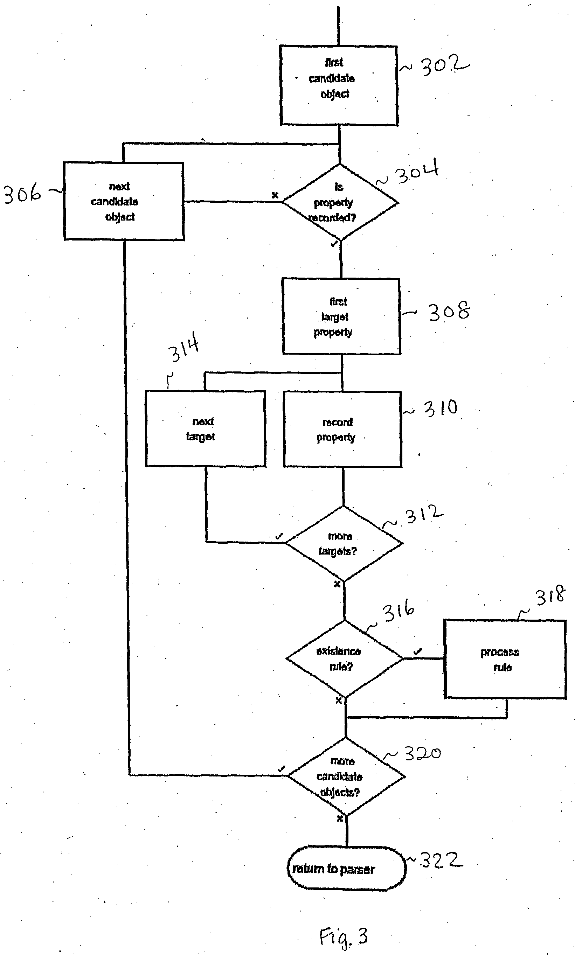

Fig. 3 is a flow diagram illustrating processing of property (Fig. 2 204) in one embodiment. At 302, for a first candidate object, it is determined whether a property is recorded at 304. If no properties are recorded for this candidate object, the processing continues to next candidate object at 306. If there are one or more properties recorded, first target property is processed at 308 by recording it at 310. At 312, if there are more properties, the processing continues to 314. If all the properties are recorded, it is determined whether there are one or more rules associated with the property(ies) at 316. If there are rules, at 318, the rules are processed. At 320, if there are more candidate objects, the process continues to 306. If all candidate objects are processes, the process returns at 322.

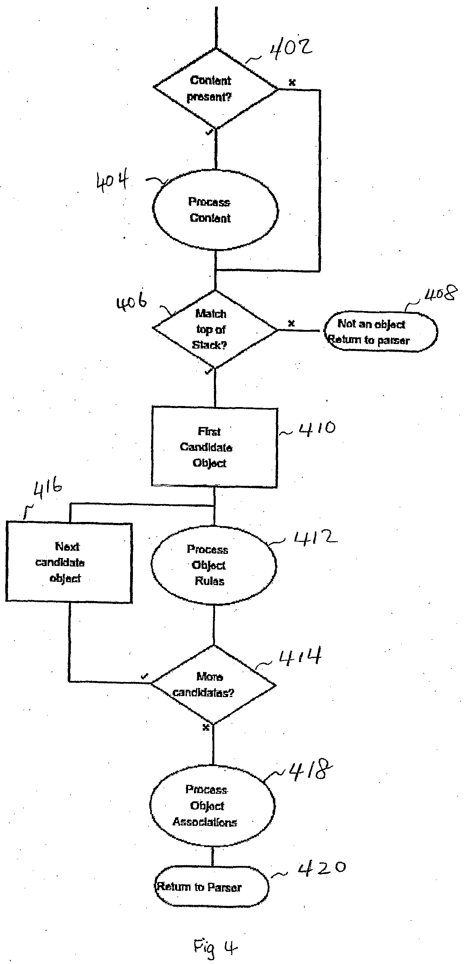

Fig. 4 is a flow diagram illustrating End Element event processing in one embodiment. At 402, if is content to process, the content is processed.at 404. At 406, it is determined whether the tag that caused the End Element event to be invoked matches with top of stack. If there is no match, the tag is not an object, and the process returns to its caller at 408. If there is a match at 406, first candidate object is processed at 410. At 412, object rules are processed. At 414, if there are more objects, the process continues to handle the next candidate object at 416. At 418, one or more object associations are processed. At 420, the process returns to its caller, for example, the parser.

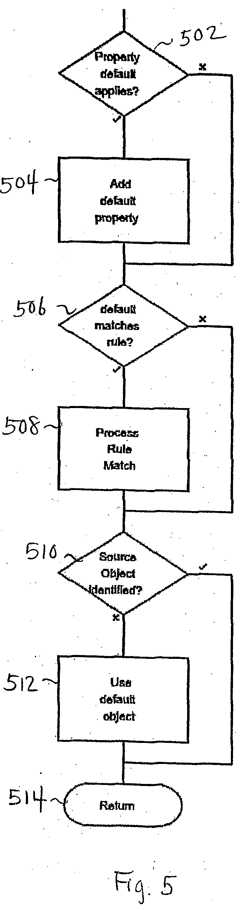

Fig. 5 is a flow diagram illustrating processing of object rules in one embodiment. At 502, it is determined whether property default applies, and if so, default property is added at 504. At 506, it is determined whether default matches rule. At 508, if default matches rule, rule match is processed. At 510, it is determined whether source object is identified. At 512, if source object is not identified, default object is used. At 514, the process returns to its caller.

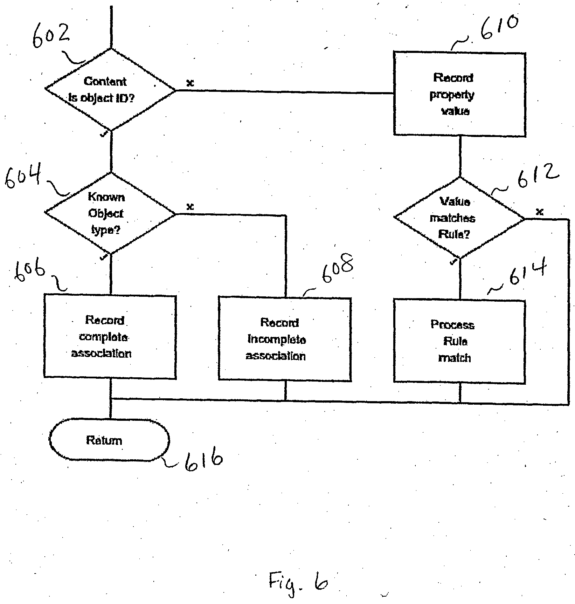

Fig. 6 is a flow diagram illustrating processing of content in one embodiment. At 602, it is determined whether the content is object identifier (ID). If the content is object ID, it is determined whether object type is known at 604. If object type is known, complete association is recorded at 606. If object type is not known, incomplete association is recorded at 608. At 610, if content is not object ID, property value is recorded. At 612, it is determined whether the value matches rule. If the value matches rules, rule match is processed at 614. At 616, the process returns.

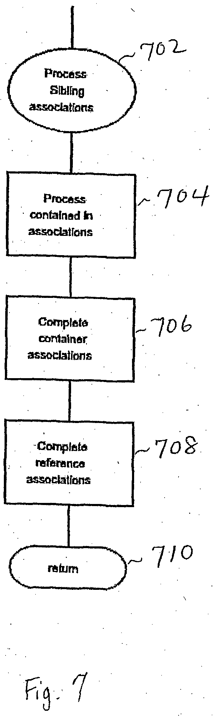

Fig. 7 is a flow diagram illustrating processing of object associations in one embodiment. At 702, sibling associations are processes. At 704, contained-in associations are processed. At 706, container associations are processed. At 708, reference associations are processed. At 710, the process returns.

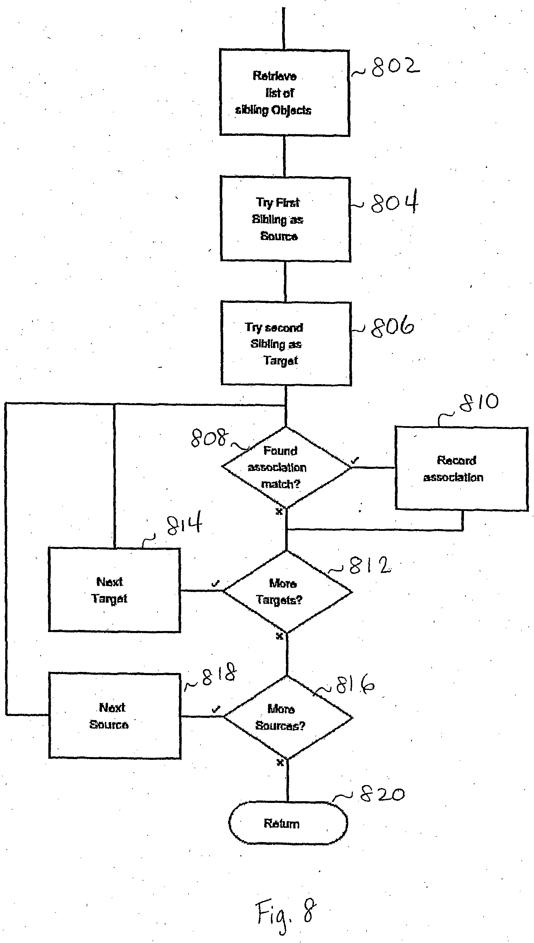

Fig. 8 is a flow diagram illustrating the sibling processing component of Fig. 7, in one embodiment. At 802, a list of sibling Objects is retrieved. At 804, first sibling is tried as source. At 806, second sibling is tried as target. At 808, it is determined whether association match is found. At 810, if association match is found, association is recorded. At 812, it is determined if there are more targets. If there are more targets, next target is processed at 814. At 816, it is determined if there are more sources. If there are more sources, next source is processed at 818. At 820, the process returns.

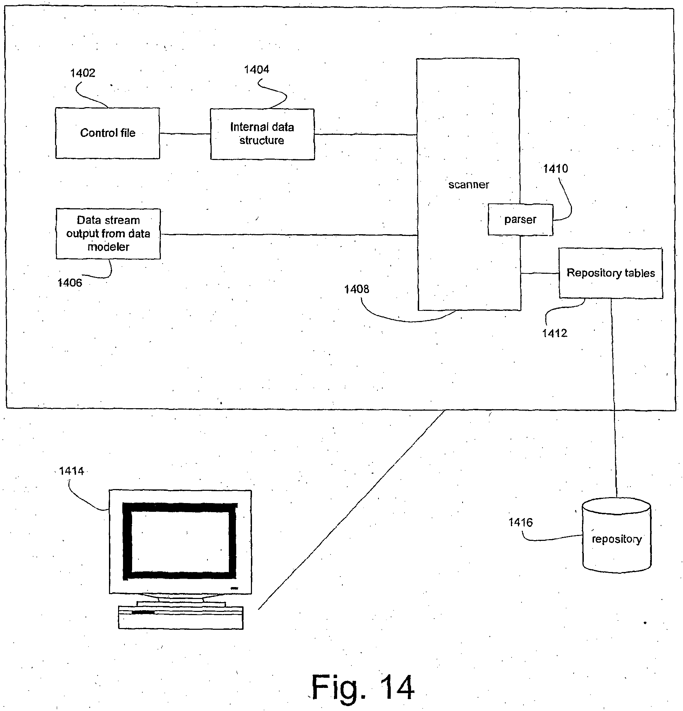

Fig. 14 illustrates system components of the present disclosure in one embodiment. Control file 1402 that includes information about the data stream output from data modeler 1406 may be converted into internal data structure 1404, for instance, for easier lookup by the scanner when transforming the data stream 1406 to repository format 1412. The control file 1402 and the data stream 1406 may be in XML format Scanner 1408, for instance using a parser 1410 such as SAX, parses the data stream 1406 and analyzes the parsed data using the control file 1402 information converted into internal data structure 1040. The data stream output form data modeler 1406 is thus converted into repository tables 1412 as described above, for instance, as described with references to Fig. 1 to 13. Repository tables built may then be stored in a repository 1416. A computer processor 1414 may be used to carry out the method of the present disclosure.

The system and method of the present disclosure may be implemented and run on any processing unit such as a general-purpose computer or a specially programmed device. The embodiments described above are illustrative examples and it should not be construed that the present invention is limited to these particular embodiments. Thus, various changes and modifications may be effected by one skilled in the art without departing from the scope of the invention as defined in the appended claims.

## Claims

1. A method for transforming output of a data modeler to a relational table form, comprising:
receiving (102) a stream of data output from a data modeler;
transforming the stream of data into a relational table form using a data scanner; and
building a relational database comprising streams of data in relational data form;
**characterised by**:
receiving (102) a control file associated with the stream of data, the control file comprising at least one of a declaration mapping one or more source objects to one or more target objects in the stream of data, a declaration mapping one or more source object properties to one or more target object properties in the stream of data, and a declaration of one or more relationships between objects of the data modeler; and
using (104,106,108) the received control file to adapt the data scanner to become operable to transform said associated stream of data into a relational table form by:
converting (106) the control file into an internal data structure;
parsing (108) the stream of data to determine one or more of elements, attributes, associations, and relationships in the associated stream of data by referencing the internal data structure; and
writing (108) the parsed stream of data to a relational database in the relational table form.

2. The method of claim 1, wherein the parsing the stream of data further includes:
invoking a plurality of events for handling events in the stream of data.

3. The method of claim 2, wherein the plurality of events includes at least one of start document event, start element event, characters event, end element event and end document event.

4. The method of claim 1, wherein the control file includes a declaration mapping of object name from the data modeler to a table name in the relational table form.

5. The method of claim 1, wherein the control file includes a declaration mapping of one or more properties from the data modeler to one or more properties in the relational table form.

6. The method of claim 1, wherein the control file is in XML format.

7. The method of claim 1, wherein the stream of data output from a data modeler is in XML format.

8. A system for transforming output of a data modeler to a relational table form, comprising:
means (1414) for receiving a stream of data (1406) output from a source system;
scanning means (1408,1410) for transforming the stream of data into a relational table form; and
means (1414) for building a relational database comprising streams of data in relational data form;
**characterised by**:
means (1414) for receiving a control file (1402) associated with the received stream of data (1406), the control file comprising at least one of a declaration mapping one or more source objects to one or more target objects in the stream of data, a declaration mapping one or more source object properties to one or more target object properties in the stream of data, and a declaration of one or more relationships between objects of the data modeler; and
means (1414) for using the received control file to adapt the scanning means to become operable to transform said associated stream of data into a relational table form by:converting the control file (1402) into an internal data structure (1404);
parsing the associated stream of data (1406) to determine one or more of elements, attributes, associations, and relationships in the stream of data by referencing the internal data structure; and
writing the parsed stream of data to a relational database (1412;1416) in the relational data form.

9. The system of claim 8, further including a plurality of events invoked as the scanner parses the stream of data output.

10. The system of claim 8, wherein the control file includes a declaration mapping of object name from the data modeler to a table name in the relational table form.

11. The system of claim 8, wherein the control file includes a declaration mapping of one or more properties from the data modeler to one or more properties in the relational table form.

12. The system of claim 8, wherein the control file is in XML format.

13. The system of claim 8, wherein the stream of data output from a data modeler is in XML format.

14. A program storage device readable by machine, tangibly embodying a program of instructions executable by the machine to perform a method for transforming output of a data modeler to a repository storage form, in accordance with any one of claims 1 to 7.

## Patentansprüche

1. Verfahren zum Transformieren des Ausgangs eines Datenmodellierers in die Form einer relationalen Tabelle, das Folgendes beinhaltet:
Empfangen (102) eines Datenausgangsstroms von einem Datenmodellierer;
Transformieren des Datenstroms in die Form einer relationalen Tabelle mittels eines Datenscanners; und
Erstellen einer relationalen Datenbank, die Datenströme in Form von relationalen Daten beinhaltet;
**gekennzeichnet durch**:
Empfangen (102) einer mit dem Datenstrom assoziierten Steuerdatei, wobei die Steuerdatei wenigstens eines aus Declaration-Mapping von einem oder mehreren Quellobjekten auf ein oder mehrere Zielobjekte in dem Datenstrom, Declaration-Mapping von einer oder mehreren Quellobjekteigenschaften auf eine oder mehrere Zielobjekteigenschaften in dem Datenstrom, und Declaration von einer oder mehreren Beziehungen zwischen Objekten des Datenmodellierers umfasst; und
Verwenden (104, 106, 108) der empfangenen Steuerdatei zum Adaptieren des Datenscanners so, dass er zum Transformieren des genannten assoziierten Datenstroms in die Form einer relationalen Tabelle benutzt werden kann, **durch**:
Konvertieren (106) der Steuerdatei in eine interne Datenstruktur;
Parsen (108) des Datenstroms zum Ermitteln von einem oder mehreren aus Elementen, Attributen, Assoziationen und Beziehungen in dem assoziierten Datenstrom **durch** Referenzieren der internen Datenstruktur; und
Schreiben (108) des geparsten Datenstroms in eine relationale Datenbank in Form der relationalen Tabelle.

2. Verfahren nach Anspruch 1, wobei das Parsen des Datenstroms ferner Folgendes beinhaltet:
Aufrufen mehrerer Events zum Handhaben von Events in dem Datenstrom.

3. Verfahren nach Anspruch 2, wobei die mehreren Events wenigstens eines aus Startdokumentevent, Startelementevent, Zeichenevent, Endelementevent und Enddokumentevent beinhalten.

4. Verfahren nach Anspruch 1, wobei die Steuerdatei ein Declaration-Mapping von Objektname vom Datenmodellierer auf Tabellenname in Form einer relationalen Tabelle beinhaltet.

5. Verfahren nach Anspruch 1, wobei die Steuerdatei ein Declaration-Mapping von einer oder mehreren Eigenschaften vom Datenmodellierer auf eine oder mehrere Eigenschaften in Form der relationalen Tabelle beinhaltet.

6. Verfahren nach Anspruch 1, wobei die Steuerdatei im XML-Format vorliegt.

7. Verfahren nach Anspruch 1, wobei der Datenausgangsstrom von einem Datenmodellierer im XML-Format vorliegt.

8. System zum Transformieren von Ausgang eines Datenmodellierers in die Form einer relationalen Tabelle, das Folgendes umfasst:
Mittel (1414) zum Empfangen eines Datenausgangsstroms (1406) von einem Quellsystem;
Scanmittel (1408, 1410) zum Transformieren des Datenstroms in die Form einer relationalen Tabelle; und
Mittel (1414) zum Erstellen einer relationalen Datenbank, die Datenströme in Form von relationalen Daten beinhaltet;
**gekennzeichnet durch**:
Mittel (1414) zum Empfangen einer mit dem empfangenen Datenstrom (1406) assoziierten Steuerdatei (1402), wobei die Steuerdatei wenigstens eines aus Declaration-Mapping von einem oder mehreren Quellobjekten auf ein oder mehrere Zielobjekte in dem Datenstrom, Declaration-Mapping von einer oder mehreren Quellobjekteigenschaften auf eine oder mehrere Zielobjekteigenschaften in dem Datenstrom und Declaration von einer oder mehreren Beziehungen zwischen Objekten des Datenmodellierers umfasst; und
Mittel (1414) zum Benutzen der empfangenen Steuerdatei zum Adaptieren des Scanmittels, so dass es zum Transformieren des genannten assoziierten Datenstroms in die Form einer relationalen Tabelle benutzt werden kann, **durch**:
Konvertieren der Steuerdatei (1402) in eine interne Datenstruktur (1404);
Parsen des assoziierten Datenstroms (1406), um eines oder mehrere aus Elementen, Attributen, Assoziationen und Beziehungen in dem Datenstrom **durch** Referenzieren der internen Datenstruktur zu bestimmen; und
Schreiben des geparsten Datenstroms auf eine relationale Datenbank (1412; 1416) in Form der relationalen Daten.

9. System nach Anspruch 8, das ferner mehrere Ereignisse beinhaltet, die aufgerufen werden, während der Scanner den Datenstromausgang parst.

10. System nach Anspruch 8, wobei die Steuerdatei Declaration-Mapping von Objektname vom Datenmodellierer auf einen Tabellennamen in Form einer relationalen Tabelle beinhaltet.

11. System nach Anspruch 8, wobei die Steuerdatei Declaration-Mapping von einer oder mehreren Eigenschaften vom Datenmodellierer auf eine oder mehrere Eigenschaften in Form der relationalen Tabelle beinhaltet.

12. System nach Anspruch 8, wobei die Steuerdatei im XML-Format vorliegt.

13. System nach Anspruch 8, wobei der Datenausgangsstrom von einem Datenmodellierer im XML-Format vorliegt.

14. Programmspeichergerät, das von einer Maschine lesbar ist, das ein Programm von Befehlen fassbar ausgestaltet, die von der Maschine ausgeführt werden können, um ein Verfahren zum Transformieren von Ausgang eines Datenmodellierers in eine Repository-Speicherform nach einem der Ansprüche 1 bis 7 auszuführen.

## Revendications

1. Un procédé de transformation d'une sortie d'un modélisateur de données sous forme de tableau relationnel, comprenant :
la réception (102) d'un train de données produit en sortie à partir d'un modélisateur de données,
la transformation du train de données sous forme de tableau relationnel au moyen d'un scanner de données, et
la construction d'une base de données relationnelle contenant des trains de données sous forme de données relationnelles,
**caractérisé par** :
la réception (102) d'un fichier de commande associé au train de données, le fichier de commande contenant au moins une déclaration parmi une déclaration mettant en correspondance un ou plusieurs objets sources avec un ou plusieurs objets cibles dans le train de données, une déclaration mettant en correspondance une ou plusieurs propriétés d'objet source avec une ou plusieurs propriétés d'objet cible dans le train de données et une déclaration d'une ou de plusieurs relations entre objets du modélisateur de données, et
l'utilisation (104, 106, 108) du fichier de commande reçu de façon à adapter le scanner de données de sorte qu'il devienne utilisable pour transformer ledit train de données associé sous forme de tableau relationnel par :
la conversion (106) du fichier de commande en une structure de données interne,
l'analyse (108) du train de données de façon à déterminer un ou plusieurs objets parmi éléments, attributs, associations et relations dans le train de données associé en faisant référence à la structure de données interne, et
l'écriture (108) du train de données analysé vers une base de données relationnelle sous forme de tableau relationnel.

2. Le procédé selon la Revendication 1, où l'analyse du train de données comprend en outre :
l'invocation d'une pluralité d'événements destinés à la gestion d'événements dans le train de données.

3. Le procédé selon la Revendication 2, où la pluralité d'événements comprend au moins un événement parmi un événement de début de document, un événement de début d'élément, un événement de caractères, un événement de fin d'élément et un événement de fin de document.

4. Le procédé selon la Revendication 1, où le fichier de commande contient une déclaration mettant en correspondance un nom d'objet du modélisateur de données avec un nom de tableau sous forme de tableau relationnel.

5. Le procédé selon la Revendication 1, où le fichier de commande contient une déclaration mettant en correspondance une ou plusieurs propriétés du modélisateur de données avec une ou plusieurs propriétés sous forme de tableau relationnel.

6. Le procédé selon la Revendication 1, où le fichier de commande est au format XML.

7. Le procédé selon la Revendication 1, où le train de données produit en sortie à partir d'un modélisateur de données est au format XML.

8. Un système de transformation d'une sortie d'un modélisateur de données sous forme d'un tableau relationnel, comprenant :
un moyen (1414) de réception d'un train de données (1406) produit en sortie à partir d'un système source,
un moyen de balayage (1408, 1410) destiné à la transformation du train de données sous forme de tableau relationnel, et
un moyen (1414) de construction d'une base de données relationnelle contenant des trains de données sous forme de données relationnelles,
**caractérisé par** :
un moyen (1414) de réception d'un fichier de commande (1402) associé au train de données reçu (1406), le fichier de commande contenant au moins une déclaration parmi une déclaration mettant en correspondance un ou plusieurs objets sources avec un ou plusieurs objets cibles dans le train de données, une déclaration mettant en correspondance une ou plusieurs propriétés d'objet source avec une ou plusieurs propriétés d'objet cible dans le train de données et une déclaration d'une ou de plusieurs relations entre objets du modélisateur de données, et
un moyen (1414) d'utilisation du fichier de commande reçu de façon à adapter le moyen de balayage de sorte qu'il devienne utilisable pour transformer ledit train de données associé sous forme de tableau relationnel par : la conversion du fichier de commande (1402) en une structure de données interne (1404),
l'analyse du train de données associé (1406) de façon à déterminer un ou plusieurs objets parmi éléments, attributs, associations et relations dans le train de données en faisant référence à la structure de données interne, et
l'écriture du train de données analysé vers une base de données relationnelle (1412 ; 1416) sous forme de données relationnelles.

9. Le système selon la Revendication 8, comprenant en outre une pluralité d'événements invoqués au moment où le scanner analyse le train de données produit en sortie.

10. Le système selon la Revendication 8, où le fichier de commande contient une déclaration mettant en correspondance un nom d'objet du modélisateur de données avec un nom de tableau sous forme de tableau relationnel.

11. Le système selon la Revendication 8, où le fichier de commande contient une déclaration mettant en correspondance une ou plusieurs propriétés du modélisateur de données avec une ou plusieurs propriétés sous forme de tableau relationnel.

12. Le système selon la Revendication 8, où le fichier de commande est au format XML.

13. Le système selon la Revendication 8, où le train de données produit en sortie à partir d'un modélisateur de données est au format XML.

14. Un dispositif de conservation en mémoire de programmes lisible par ordinateur incorporant de manière tangible un programme d'instructions exécutable par l'ordinateur de façon à exécuter un procédé de transformation d'une sortie d'un modélisateur de données sous forme de mémoire d'archivage selon l'une quelconque des Revendications 1 à 7.
